# EUROPEAN PATENT SPECIFICATION

(11) **EP 3 757 602 B1**
(45) Date of publication and mention of the grant of the patent: **12.02.2025**
(21) Application number: 19754546.0
(22) Date of filing: 13.02.2019
(51) Int. Cl.: H04N 23/16, H04N 23/45, H04N 25/705, G01S 7/481, G01S 7/4863, G02B 13/14, G02B 17/08, G02B 6/08, H04N 23/55, H04N 23/56, G01S 17/10, G01S 17/894, G02B 26/08, G01S 17/87

(54) **ELECTROMAGNETIC WAVE DETECTION DEVICE AND INFORMATION ACQUISITION SYSTEM**
ELEKTROMAGNETISCHE WELLENDETEKTIONSVORRICHTUNG UND INFORMATIONSERFASSUNGSSYSTEM
DISPOSITIF DE DÉTECTION D'ONDE ÉLECTROMAGNÉTIQUE ET SYSTÈME D'ACQUISITION D'INFORMATION

(30) Priority: 19.02.2018 JP 2018027323; 07.06.2018 JP 2018109593
(43) Date of publication of application: 30.12.2020
(73) Proprietor: Kyocera Corporation, Fushimi-ku, Kyoto-shi, Kyoto 612-8501 (JP)
(72) Inventor: TAKEUCHI, Eri, Kyoto-shi, Kyoto 612-8501 (JP)
(74) Representative: Viering, Jentschura & Partner mbB Patent- und Rechtsanwälte
(86) International application number: PCT/JP2019/005002
(87) International publication number: WO 2019/159933

(56) References cited:
- EP-A1- 0 911 667
- WO-A1-03/025656
- WO-A1-03/025656
- JP-A- 2002 214 543
- JP-A- 2003 149 544
- JP-A- 2003 149 544
- JP-A- H11 194 275
- JP-A- S 629 318
- US-A1- 2003 010 930
- US-A1- 2007 216 769

## Description

### CROSS REFERENCE TO RELATED APPLICATIONS

This application claims priority to and the benefit of Japanese Patent Applications No. 2018-027323 filed on February 19, 2018 and No. 2018-109593 filed on June 7, 2018.

### TECHNICAL FIELD

The present disclosure relates to an electromagnetic wave detection apparatus and an information acquisition system.

### BACKGROUND

Devices such as a DMD (Digital Micromirror Device) that include an element for changing a progression direction of electromagnetic waves incident on each pixel are known. For example, an apparatus that forms a primary image of an object on a surface of a DMD and then forms a secondary image of the primary image formed on the surface of the DMD on a surface of a CCD (Charge-Coupled Device) via a lens is known (see PTL 1 set forth below).

US 2003/010930 Al discloses an arrangement for reading out the fluorescent radiation of specimen carriers with a plurality of individual specimens which for purposes of exciting fluorescent radiation in selected individual specimens comprises: a switchable electro-optical matrix for generating illumination which is limited in a spatially defined manner; an optical system for imaging the electro-optical matrix on the specimen carrier, wherein exchangeable excitation filters are arranged in the beam path in front of the specimen carrier for optimal excitation of fluorescence; and a high-sensitivity photoreceiver for integral measurement of the fluorescent radiation of the excited individual specimens of the specimen carrier; said electro-optical matrix being arranged in the object plane of the optical system and said specimen carrier being arranged in the image plane; said electro-optical matrix and the specimen carrier being inclined relative to the optical axis of the optical system and are subject to a Scheimpflug condition, so that the object plane and object-side principal plane and the image plane and image-side principal plane of the optical system have two section lines lying in the same plane parallel to the optical axis; and the angles of inclination of the electro-optical matrix and of the specimen carrier being selected such that the excitation radiation coming from the light source unit and reflected by the electro-optical matrix and imaged on the specimen carrier by the optical system is reflected at the specimen carrier in such a way that essentially no excitation radiation reaches the detection beam path.

EP 0 911 667 Al discloses a confocal optical imaging system comprising: light source means; detector means with at least one two-dimensional detector camera; and spatial light modulator means with a first and a second group of modulator elements, wherein the first group of modulator elements is adapted to illuminate an object to be investigated according to a predetermined pattern sequence of illumination spots focused to conjugate locations of the object, wherein detection light from the conjugate locations forms a first image at the detector means, and wherein the second group of elements is adapted to collect light at non-conjugate locations of the object wherein detection light from the non-conjugate locations forms a second image at the detector means.

### CITATION LIST

### Patent Literature

PTL 1: JP 3507865 B2

### SUMMARY

The present invention provides an electromagnetic wave detection apparatus according to claim 1, and an information acquisition system according to claim 12. Further embodiments of the present invention are disclosed in the dependent claims.

### BRIEF DESCRIPTION OF THE DRAWINGS

FIG. 1 is a diagram illustrating a configuration of an electromagnetic wave detection apparatus that does not include an aperture in the vicinity of a front focal point of a primary image forming optical system and is configured to cause electronic waves which propagate in a progression direction, by virtue of a progression unit, to be incident on a secondary image forming optical system without leakage;
FIG. 2 is a diagram illustrating a configuration of an electromagnetic wave detection apparatus that does not include an aperture in the vicinity of a front focal point of a primary image forming optical system and is configured to cause electronic waves which propagate in a progression direction, by virtue of a progression unit, to be incident on a secondary image forming optical system while avoiding interference by the primary image forming optical system and the secondary image forming optical system;
FIG. 3 is a diagram illustrating a schematic configuration of an information acquisition system that includes an electromagnetic wave detection apparatus according to a first embodiment;
FIG. 4 is a diagram illustrating a schematic configuration of the electromagnetic wave detection apparatus according to the first embodiment, included in the information acquisition system illustrated in FIG. 3:
FIG. 5 is a configuration diagram illustrating an example variation of a first image forming unit illustrated in FIG. 4;
FIG. 6 is a timing chart illustrating an electromagnetic wave radiation timing and an electromagnetic wave detection timing, for explaining the principle of measurement of distance performed by a distance measuring sensor made up of an irradiator, a second detector, and a controller illustrated in FIG. 3;
FIG. 7 is a diagram illustrating an optical path in the electromagnetic wave detection apparatus illustrated in FIG. 3, for explaining spreading of electromagnetic waves that are caused to progress in a first direction by a progression unit and electromagnetic waves that are caused to progress in a second direction by the progression unit;
FIG. 8 is a diagram illustrating a range of an angle of view of an image in a secondary image forming optical system to be formed on a detection surface in an electromagnetic wave detection apparatus in which a principal plane of a primary image forming optical system, a reference surface of a progression unit, a principal plane of the secondary image forming optical system, and the detection surface of a detector are parallel with one another;

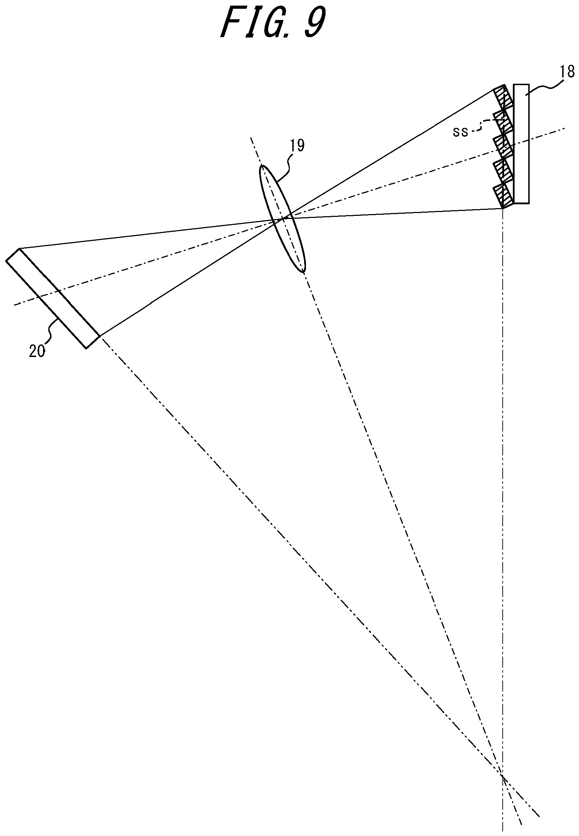

FIG. 9 is a diagram illustrating a range of an angle of view of an image at the second image forming unit to be formed on the first detection surface in the electronic wave detection apparatus illustrated in FIG. 4; and
FIG. 10 is a diagram illustrating a schematic configuration of an electromagnetic wave detection apparatus according to a second embodiment.

### DETAILED DESCRIPTION

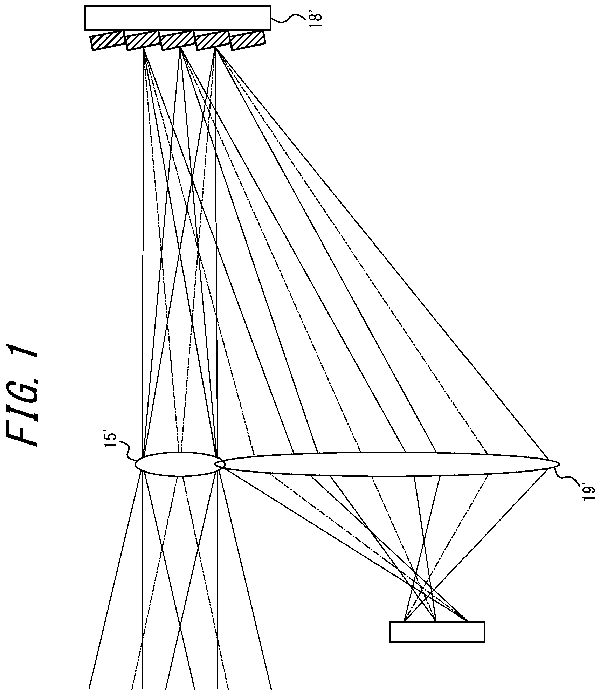

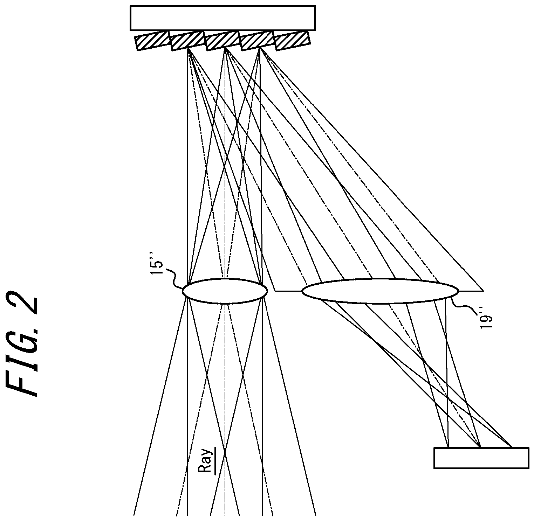

It is advantageous to homogenize the intensity of electromagnetic waves of a secondary image while downsizing an entire apparatus. The present disclosure relates to homogenization of the intensity of electromagnetic waves of a secondary image without enlarging an apparatus. The intensity of electromagnetic waves of a secondary image may be homogenized. Hereinafter, embodiments of an electromagnetic wave detection apparatus that apply the present disclosure will be described with reference to the drawings. An electromagnetic wave detection apparatus includes a primary image forming optical system configured to form an image of electromagnetic waves incident thereon, a progression unit configured to direct electromagnetic waves having propagated from the primary image forming optical system and being incident on a reference surface in a direction different from an incident direction using each pixel, a secondary image forming optical system configured to cause a detector to form an image of electromagnetic waves formed on the reference surface by the progression unit, and the detector. The electromagnetic wave detection apparatus can cause the detector to detect electromagnetic waves of the secondary image. Unlike a relay lens, however, the progression unit does not refract electronic waves incident thereon. Thus, an image of electromagnetic waves formed on the reference surface progresses in a progression direction while spreading. Accordingly, in order to cause the electromagnetic waves incident on the progression unit to be incident on the secondary image forming optical system without leakage, it is necessary to adopt a large secondary image forming optical system 19' as illustrated in FIG. 1, which hinders downsizing of the entire apparatus. Further, in a configuration that applies a DMD as the progression unit, the large secondary image forming optical system 19' may interfere with a primary image forming optical system 15' and complicate actual manufacture. This is due to a relatively small switching angle of the DMD, whereby an angle formed by a direction of electromagnetic waves that are progressed to the DMD from the primary image forming optical system 15' and a direction of electromagnetic waves that are progressed by the DMD is also small. As illustrated in FIG. 2, meanwhile, by reducing a length of a back flange of a primary image forming optical system 15" and downsizing a secondary image forming optical system 19", downsizing of an apparatus may be realized while avoiding interference between the primary image forming optical system 15" and the secondary image forming optical system 19". However, vignetting can occur to electromagnetic waves reflected by some pixels, and a secondary image may have uneven intensity. As such, the electromagnetic wave detection apparatus applying the present disclosure can suppress the spread of electromagnetic waves advancing in the progression direction from the reference surface and reduce the probability of the occurrence of vignetting caused by some pixels, without adopting a large secondary image forming optical system.

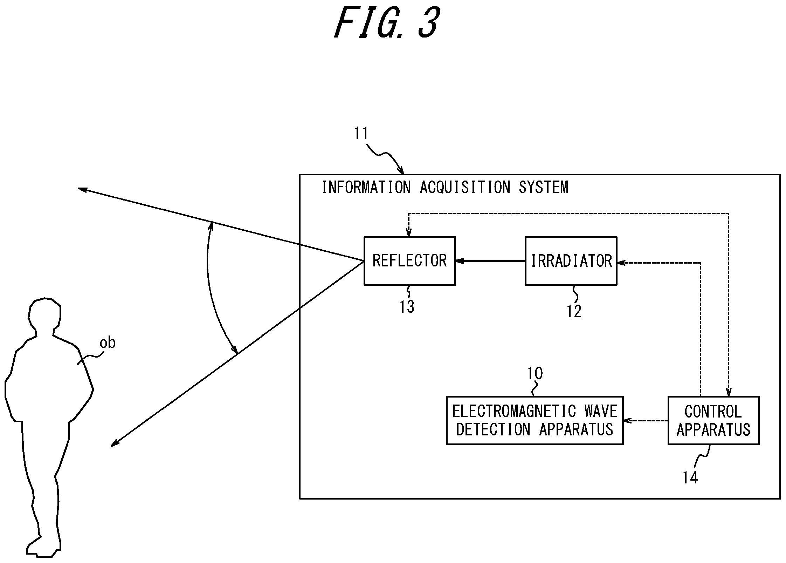

An information acquisition system 11 that includes an electromagnetic wave detection apparatus 10 according to a first embodiment of the present disclosure includes the electromagnetic wave detection apparatus 10, an irradiator 12, a reflector 13, and a control apparatus 14, as illustrated in FIG. 3.

In subsequent drawings, a broken line connecting functional blocks indicates a flow of a control signal or communicated information. Communication represented by a broken line may be wired communication or wireless communication. A solid line projecting from each functional block indicates a beam of electromagnetic waves.

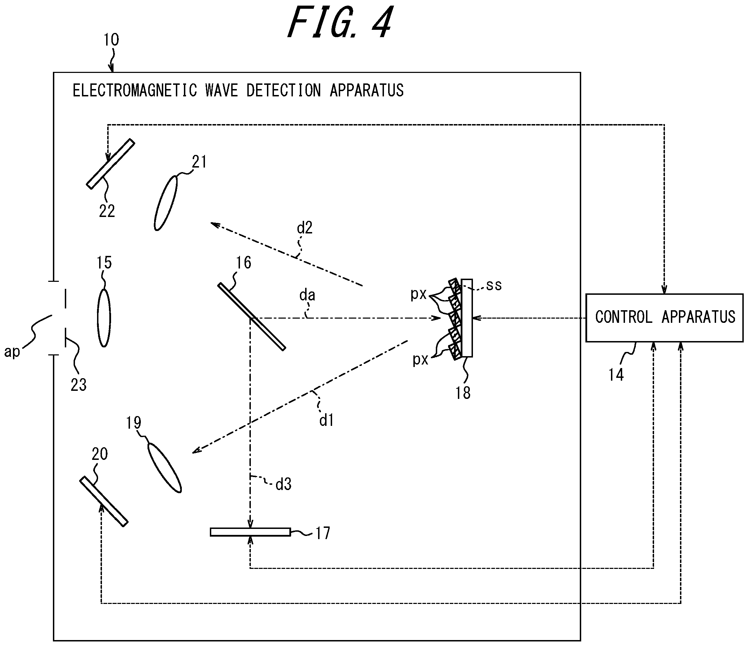

As illustrated in FIG. 4, the electromagnetic wave detecting apparatus 10 includes a first aperture 23, a first image forming unit 15, a separator 16, a progression unit 18, a second image forming unit 19, a first detector 20, a third image forming unit 21, a second detector 22, and a third detector 17.

The first aperture 23 defines, for example, an aperture and allows a portion of electromagnetics wave incident on the aperture to pass therethrough. The first aperture 23 may be, for example, an aperture stop and may function as a diaphragm for the first image forming unit 15 configured to adjust an amount of electromagnetic waves to pass therethrough.

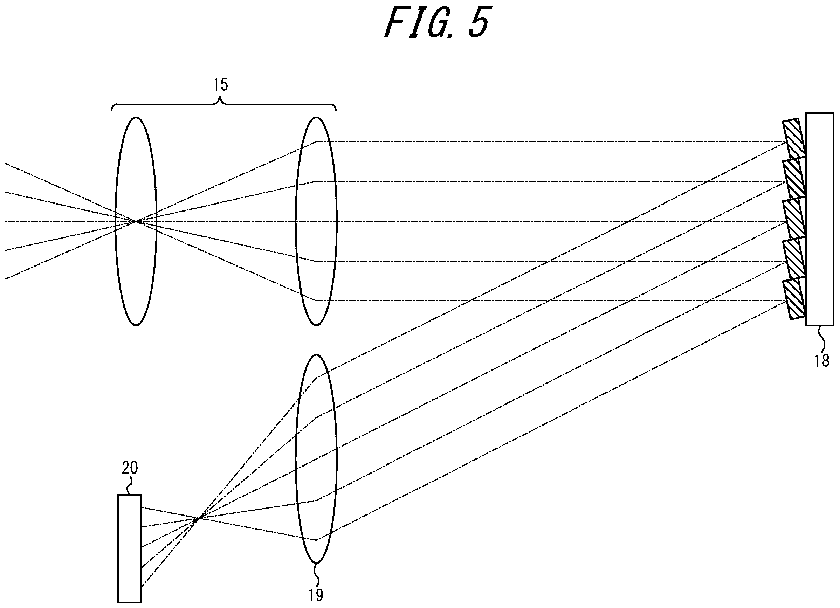

The first aperture 23 is arranged at a location in the vicinity of a front focal point of the first image forming unit 15. The "location in the vicinity of the front focal point" is a location of the aperture where an angle formed by a principal ray of each angle of view on an image side of the first image forming unit 15 and a principal axis of the first image forming unit 15 is equal to or smaller than a predetermined value. In other words, the "location in the vicinity of the front focal point" is a location of the aperture where an angle formed by a principal ray of a largest angle of view on the image side of the first image forming unit 15 and the principal axis of the first image forming unit 15 is equal to or smaller than the predetermined value. The predetermined value may be, for example, 15°. Further, the first aperture 23 may be arranged at the front focal point of the first image forming unit 15, and constitutes an image side telecentric optical system, together with the first image forming unit 15. When progression axes of angles of view of electromagnetic waves having passed through the first image forming unit 15 are approximately parallel to one another as illustrated in FIG. 5, the first aperture 23 does not need to constitute the image side telecentric optical system, together with the first image forming unit 15.

The first image forming unit 15 forms an image of incident electromagnetic waves from the first aperture 23. The first image forming unit 15 is arranged in such a manner that an angle formed by a progression axis of electromagnetic waves with each angle of view having passed through the first image forming unit 15 and a principal axis of the first image forming unit 15 is equal to or smaller than the predetermined value mentioned above. The first image forming unit 15 may be arranged such that the progression axis and the principal axis are parallel to each other. For example, the first image forming unit 15 may be arranged such that the progression axis of incident electromagnetic waves with each angle of view sequentially pass through a center of an image forming part on a preceding stage and then an image forming part on a subsequent stage, as illustrated in FIG. 5.

The first image forming unit 15 may be arranged at a location opposing an aperture ap formed in a housing of the electromagnetic wave detection apparatus 10 in such a manner that an axis of the aperture ap and the principal axis are parallel to each other. Note that, in a configuration in which the aperture ap is defined by a cylinder such as a barrel, the axis of the aperture ap is an axis of the cylinder. In a configuration in which the aperture ap is formed by the housing itself, the axis of the aperture ap is a line that passes through the center of the aperture ap and is perpendicular to a wall surface of the housing surrounding the aperture ap. Although the aperture ap is different from the opening defined by the first aperture 23, the aperture ap may be the opening defined by the first aperture 23.

The first image forming unit 15 includes, for example, at least one of a lens and a mirror. The first image forming unit 15 forms an image of incident electromagnetic waves that have passed through the first aperture 23 from an object ob serving as a subject. The fist image forming unit 15 may be a retrofocus lens system.

The separator 16 is arranged between the first image forming unit 15 and a primary image forming location where an image of the object ob is formed by the first image forming unit 15. The separator 16 separates incident electromagnetic waves from the first image forming unit 15 into electromagnetic waves that progress in a progression unit direction da towards the progression unit 18 and electromagnetic waves that progress in a third progression direction d3 towards the third detector 17. The separator 16 may separate electromagnetic waves such that incident electromagnetic waves of a first frequency progress in the progression unit direction da and incident electromagnetic waves of a second frequency progress in the third direction d3.

The separator 16 separates incident electromagnetic waves into electromagnetic waves that progress in the third direction d3 and electromagnetic waves that progress in the progression direction, by employing at least one of reflection, separation, and refraction. The separator 16 reflects some of incident electromagnetic waves in the third direction d3 and transmits other incident electromagnetic waves in the progression unit direction d3, by way of example. For example, the separator 16 may transmit some of incident electromagnetic waves in the third direction d3 and reflect other incident electromagnetic waves in the progression unit direction da. For example, the separator 16 may refract some of incident electromagnetic waves in the third direction d3 and transmit other incident electromagnetic waves in the progression unit direction da. For example, the separator 16 may transmit some of incident electromagnetic waves in the third direction d3 and refract other incident electromagnetic waves in the progression unit direction da. For example, the separator 16 may refract some of incident electromagnetic waves in the third direction d3 and refract other incident electromagnetic waves in the progression unit direction da.

The separator 16 may include at least one of, for example, a half mirror, a beam splitter, a dichroic mirror, a cold mirror, a hot mirror, a meta surface, a deflecting element, and a prism.

The progression unit 18 is arranged on a path of electromagnetic waves progressing in the progression unit direction da from the separator 16. Further, the progression unit 18 is arranged at or in the vicinity of the primary image forming location of the object ob in the progression unit direction da by the first image forming unit 15.

In the first embodiment, the progression unit 18 is arranged at the primary image forming location. The progression unit 18 has a reference surface ss on which electromagnetic waves having passed through the first image forming unit 15 and the separator 16 are to be incident. The reference surface ss is composed of a plurality of pixels px arranged in a two-dimensional manner. The reference surface ss is a surface that causes effects such as, for example, reflection and transmission of an electromagnetic wave in at least one of a first state and a second state, which will be described later. The reference surface ss may be perpendicular to a central axis of electromagnetic waves that progress in the progression unit direction da from the separator 16.

The progression unit 18 can switch each of the pixels px between the first state in which electromagnetic waves incident on the reference surface ss are caused to progress in a first direction d1 and the second state in which electromagnetic waves incident on the reference surface ss are caused to progress in a second direction d2. The first state is a first reflection state in which electromagnetic waves incident on the reference surface ss are reflected in the first direction d1. The second state is a second reflection state in which electromagnetic waves incident on the reference surface ss are reflected in the second direction d2.

The progression unit 18 includes, in particular, a reflection surface for each of the pixels px to reflect electromagnetic waves. The progression unit 18 switches between the first reflection state and the second reflection state by changing an orientation of the reflection surface for each of the pixels px.

The progression unit 18 includes, for example, a DMD (Digital Micromirror Device). The DMD can drive minute reflection surfaces constituting the reference surface ss such that the reflection surface for each of the pixels px is inclined at +12° or -12° with respect to the reference surface ss. The reference surface ss is parallel to a plate surface of the substrate having the minute reflection surfaces mounted thereon.

The progression unit 18 switches each of the pixels px between the first state and the second state, based on control by the control apparatus 14, as will be described later. For example, the progression unit 18 can simultaneously switch some of the pixels px to the first state such that electromagnetic waves incident thereon are caused to progress in the first direction d1 and switch other pixels px to the second state such that electromagnetic waves incident thereon are caused to progress in the second direction d2.

The second image forming unit 19 is arranged in the first direction d1 from the progression unit 18. The second image forming unit 19 includes, for example, at least one of a lens and a mirror. The second image forming unit 19 may be arranged such that a principal plane thereof is inclined with respect to the reference surface ss of the progression unit 18. Also, the second image forming unit 19 may be arranged such that the principal axis thereof passes through a region of the reference surface ss of the progression unit 18. Further, the second image forming unit 19 may be arranged such that the principal axis thereof passes through a center of the reference surface ss, i.e., a central pixel px. The second image forming unit 19 forms an image of the object ob from electronic waves for which the progression direction is switched by the progression unit 18.

The first detector 20 is arranged on a path of electromagnetic waves progressing from the second image forming unit 19 after progressing in the first direction d1 by virtue of the progression unit 18. The first detector 20 is arranged at or in the vicinity of a secondary image forming location where an image of electromagnetic waves formed on the reference surface ss of the progression unit 18 is formed by the second image forming unit 19. The first detector 20 may be arranged such that a detection surface thereof is inclined with respect to the reference surface ss, that is, such that an extension surface of the detection surface and an extension surface of the reference surface ss intersect each other. The first detector 20 may be arranged to incline with respect to a principal plane of the second image forming unit 19. The first detector 20 may be arranged such that a principal axis of the second image forming unit 19 passes through a range of the detection surface of the first detector 20. Further, the first detector 20 may be arranged such that the principal axis of the second image forming unit 19 pass through a center of the detection surface of the first detector 20.

The first detector 20 may be arranged such that an extension surface of its detection surface intersects an extension surface of the reference surface ss and an extension surface of the principal plane of the second image forming unit 19 on a single straight line. Accordingly, the reference surface ss, the principal plane of the second image forming unit 19, and the detection surface of the first detector 20 may be arranged in a manner satisfying the Scheimpflug principle. The first detector 20 detects electromagnetic waves having passed through the second image forming unit 19, i.e., electromagnetic waves progressing in the first direction d1.

The first detector 20 is a passive sensor. The first detector 20 includes, in particular, an element array. For example, the first detector 20 including an image sensor or an imaging array captures an image of electromagnetic waves formed on the detection surface and generates image information regarding the captured object ob.

The first detector 20 captures, in particular, an image of visible light. The first detector 20 generates the image information and transmits a signal representing the image information to the control apparatus 14.

The first detector 20 may capture an image of infrared light, ultraviolet, radio waves, or the like rather than an image of visible light. The first detector 20 may include a distance measuring sensor. In this configuration, the electromagnetic wave detection apparatus 10 can acquire distance information in the form of an image using the first detector 20. The first detector 20 may include a temperature sensor or the like. In this configuration, the electromagnetic wave detection apparatus 10 can acquire temperature information in the form of an image using the first detector 20.

The third image forming unit 21 is arranged in the second direction d2 from the progression unit 18. The third image forming unit 21 includes, for example, at least one of a lens and a mirror. The third image forming unit 21 may be arranged such that a principal plane thereof is inclined with respect to the reference surface ss of the progression unit 18. The third image forming unit 21 may be arranged such that its principal axis passes through a region of the reference surface ss of the progression unit 18. Further, the third image forming unit 21 may be arranged such that its principal axis passes through the center of the reference surface ss, i.e., the central pixel px. The third image forming unit 21 forms an image of electromagnetic waves from the object ob for which the progression direction is changed by the progression unit 18.

The second detector 22 is arranged on the path of electromagnetic waves progressing from the third image forming unit 21 after progressing in the second direction d2 by virtue of the progression unit 18. The second detector 22 is arranged at or in the vicinity of the secondary image forming location where an image of electromagnetic waves formed on the reference surface ss of the progression unit 18 is formed by the third image forming unit 21. The second detector 22 may be arranged such that a detection surface thereof is inclined with respect to the reference surface ss, that is, such that an extension surface of the detection surface and the extension surface of the reference surface ss intersect each other. The second detector 22 may be arranged to incline with respect to the principal plane of the third image forming unit 21. The second detector 22 may be arranged such that a principal axis of the third image forming unit 21 passes through a region of the detection surface of the second detector 22. Further, the second detector 22 may be arranged such that the principal axis of the third image forming unit 21 passes through the center of the detection surface of the second detector 22.

The second detector 22 may be arranged such that an extension surface of its detection surface intersects the extension surface of the reference surface ss and an extension surface of the third image forming unit 21 on a single straight line. Thus, the reference surface ss, the principal plane of the third image forming unit 21, and the detection surface of the second detector 22 may be arranged in a manner satisfying the Scheimpflug principle. The second detector 22 detects electromagnetic waves having passed the third image forming unit 21, i.e., electromagnetic waves progressing in the second direction d2.

The second detector 22 is an active sensor configured to detect electromagnetic waves reflected from the target ob after being radiated toward the object ob by the irradiator 12. The second detector 22 detects electromagnetic waves that are reflected from the object ob after being radiated by the irradiator 12, reflected by the reflector 13, and then progress to the object ob. As will be described below, the electromagnetic waves radiated by the irradiator 12 are at least one of infrared light, visible light, ultraviolet, and radio waves. The second detector 22 is a sensor of a type that is the same as or a different from that of the first detector 20, and detects electromagnetic waves of a different type or the same type.

The second detector 22 includes, in particular, an element constituting the distance measuring sensor. For example, the second detector 22 includes an element such as an APD (Avalanche PhotoDiode), a PD (PhotoDiode), an SPAD (Single Photon Avalanche Diode), a millimeter wave sensor, a submillimeter-wave sensor, or a distance image sensor. The second detector 22 may include an element array such as an APD array, a PD array, an MPPC (Multi Photon Pixel Counter), a distance measuring imaging array, or a distance measuring image sensor.

The second detector 22 transmits, as a signal, detection information indicating that electromagnetic waves reflected from the subject are detected to the control apparatus 14. The second detector 22 is, in particular, an infrared sensor configured to detect electromagnetic waves in the infrared spectrum.

The second detector 22 composed of one element constituting the distance measuring sensor as described above simply needs to be able to detect electromagnetic waves and does not need to form an image on the detection surface. Thus, the second detector 22 does not necessarily need to be arranged at or in the vicinity of the second image forming location where an image is formed by the third image forming unit 21. That is, in this configuration, provided that electromagnetic waves from all angles of view can be incident on the detection surface of the second detector 22, the second detector 22 may be arranged at any location on the path of electromagnetic waves progressing from the third image forming unit 21 after progressing in the progression unit direction da by virtue of the progression unit 18.

The third detector 17 is arranged on the path of electromagnetic waves that progress in the third direction d3 from the separator 16. Further, the third detector 17 is arranged at or in the vicinity of the image forming location of the object ob by the first image forming unit 15 in the third direction d3 from the separator 16. The third detector 17 detects electromagnetic waves progressing in the third direction d3 from the separator 16.

The third detector 17 is a passive sensor. The third detector 17 includes, in particular, an element array. For example, the third detector 17 includes an image sensor or an imaging array and is configured to capture an image of electromagnetic waves formed on the detection surface and generate image information regarding the captured object ob.

The third detector 17 captures, in particular, an image of visible light. The third detector 17 transmits, as a signal, the generated image information to the control apparatus 14.

The third detector 17 may capture an image of infrared light, ultraviolet, or radio waves, other than an image of visible light. The third detector 17 may include a distance measuring sensor. In this configuration, the electromagnetic wave detecting apparatus 10 can acquire distance information in the form of an image using the third detector 17. The third detector 17 may include a distance measuring sensor, a temperature sensor, or the like. In this configuration, the electromagnetic wave detecting apparatus 10 can acquire temperature information in the form of an image using the third detector 17.

The irradiator 12 radiates at least one of infrared light, visible light, ultraviolet, and radio waves. The irradiator 12 radiates infrared light. The irradiator 12 irradiates the object ob with electromagnetic waves, directly or indirectly via the reflector 13. The irradiator 12 irradiates the object ob with electromagnetic waves indirectly via the reflector 13.

The irradiator 12 radiates a narrow beam of electromagnetic waves having a beam spread of, for example, 0.5°. The irradiator 12 can radiate an electromagnetic wave in pulses. For example, the irradiator 12 includes an LED (Light Emitting Diode) or an LD (Laser Diode). The irradiator 12 switches between radiating and not radiating electromagnetic waves, based on control by the control apparatus 14.

The reflector 13 changes an irradiation location of electromagnetic waves which irradiate the object ob by reflecting electromagnetic waves radiated from the irradiator 12 while changing the direction thereof. That is, the reflector 13 scans the object ob using electromagnetic waves radiated from the irradiator 12. Accordingly, the second detector 22 constitutes a scanning type distance measuring sensor, together with the reflector 13. The reflector 13 scans the object ob in a one-dimension or in two-dimensions. The reflector 13 scans the object ob in two-dimensions.

The reflector 13 is configured such that at least a portion of an irradiation region of electromagnetic waves that are radiated from the irradiator 12 and reflected by the reflector 13 is included in a detection region of electromagnetic waves in the electromagnetic wave detection apparatus 10. Thus, at least some of electromagnetic waves radiated to the object ob via the reflector 13 can be detected by the electromagnetic wave detection apparatus 10.

The reflector 13 is configured such that at least a portion of the irradiation region of electromagnetic waves that is radiated from the irradiator 12 and reflected by the reflector 13 is included in a detection region of the second detector 22. Thus, at least some of electromagnetic waves radiated to the object ob via the reflector 13 can be detected by the second detector 22.

The reflector 13 includes, for example, a MEMS (Microelectromechanical systems) mirror, a polygon mirror, a galvanometer mirror, or the like. The reflector 13 includes the MEMS mirror.

The reflector 13 changes a reflection direction of electromagnetic waves, based on control by the control apparatus 14, which will be described later. The reflector 13 may include an angle sensor such as, for example, an encoder and notify the control apparatus 14 of an angle detected by the angle sensor as direction information used for reflecting electromagnetic waves. In this configuration, the control apparatus 14 can calculate the irradiation location, based on the direction information acquired from the reflector 13. Alternatively, the control apparatus 14 can calculate the irradiation location, based on a driving signal input to cause the reflector 13 to change the reflection direction of electromagnetic waves.

The control apparatus 14 includes one or more processors and a memory. The processor may include a general purpose processor configured to read a specific program and perform a specific function, or a specialized processor dedicated for specific processing. The specialized processor may include an ASIC (Application Specific Integrated Circuit). The processor may include a PLD (Programmable Logic Device). The PLD may include an FPGA (Field-Programmable Gate Array). The control apparatus 14 may include at least one of a SoC (System-on-a-Chip) that includes one or more cooperating processors or a SiP (System in a Package).

The control apparatus 14 acquires information regarding the surroundings of the electromagnetic wave detection apparatus 10, based on electromagnetic waves respectively detected by the first detector 20, the second detector 22, and the third detector 17. The information regarding the surroundings is, for example, image information, distance information, temperature information, or the like. The control apparatus 14 acquires electromagnetic waves detected as an image by the first detector 20 or the third detector 17 serving as the image information, as described above. Further, the control apparatus 14 acquires the distance information regarding the irradiation location irradiated by the irradiator 12 using a ToF (Time-of-Flight) method, which will be described later, based on the detection information detected by the second detector 22.

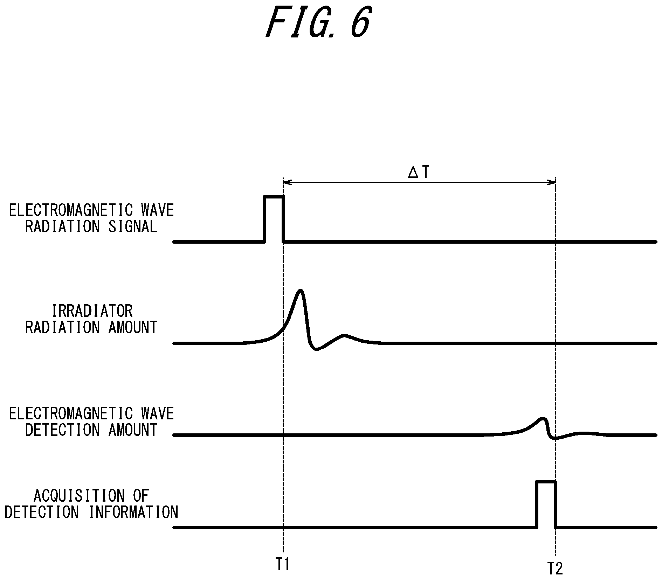

As illustrated in FIG. 6, the control apparatus 14 causes the irradiator 12 to emit electromagnetic waves in pulses by inputting an electromagnetic wave radiation signal to the irradiator 12 (see "ELECTROMAGNETIC WAVE RADIATION SIGNAL" field). The irradiator 12 emits electromagnetic waves, based on the electromagnetic wave radiation signal (see "IRRADIATOR RADIATION AMOUNT" field). The electromagnetic waves that have been radiated by the irradiator 12, reflected by the reflector 13, irradiate any irradiation region are reflected in the irradiation region. The control apparatus 14 changes at least some of the pixels px within an image formation region of the progression unit 18 for an image of the reflected wave from the irradiation region formed by the first image forming unit 15 to the first state, and changes other pixels px to the second state. Then, when the first detector 20 detects electromagnetic waves reflected from the irradiation region (see "ELECTROMAGNETIC WAVE DETECTION AMOUNT" field), the first detector 20 notifies the control apparatus 14 of the detection information, as described above.

The control apparatus 14 includes, for example, a time measuring LSI (Large Scale Integrated circuit) and measures a time ΔT from a time T1 at which the control apparatus 14 causes the irradiator 12 to radiate electromagnetic waves to a time T2 at which the detection information is acquired (see "ACQUISITION OF DETECTION INFORMATION"). The control apparatus 14 calculates a distance to the irradiation location by multiplying the time ΔT by the speed of light and then dividing an acquired value by 2. The control apparatus 14 calculates the irradiation location, based on the direction information acquired from the reflector 13 or the driving signal input to the reflector 13 by the control apparatus 14, as described above. The control apparatus 14 calculates a distance to an irradiation location while changing the irradiation location, and thus generates the distance information in the form of an image.

The information acquisition system 11 is configured to generate the distance information employing a Direct ToF technique that directly measures the time period for radiated electromagnetic waves to return, as described above. However, the information acquisition system 11 is not limited to this configuration. For example, the information acquisition system 11 may be configured to generate the distance information employing a Flash ToF technique that radiates electromagnetic waves in a constant cycle and indirectly measures the time period for the electromagnetic waves to return, based on a phase difference between the radiated electromagnetic waves and returned electromagnetic waves. The information acquisition system 11 may generate the distance employing another ToF technique such as, for example, a Phased ToF technique.

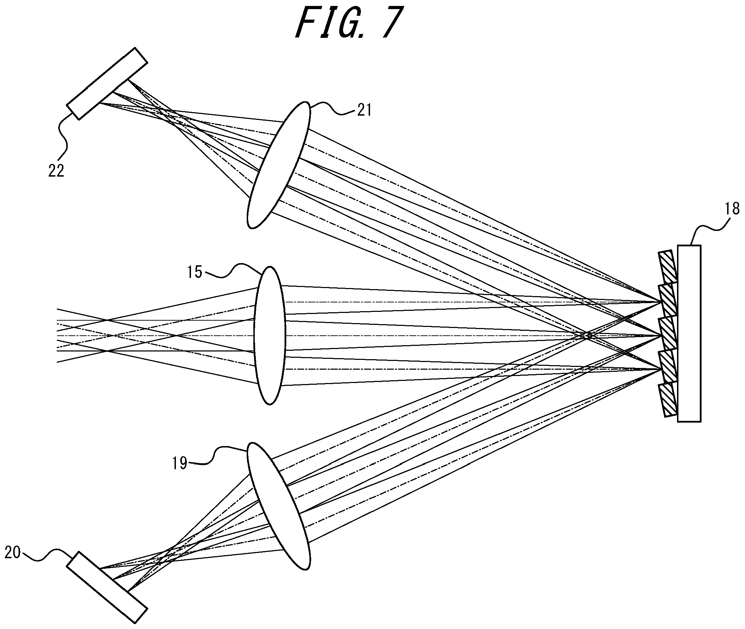

The electromagnetic wave detecting apparatus 10 configured as described above causes electromagnetic waves incident on the first image forming unit 15 to be incident on the reference surface ss of the progression unit 18, and the angle formed by the progression angle of each angle of view of the first image forming unit 15 and the principal axis of the first image forming unit 15 is equal to or smaller than the predetermined value. Thus, in the electromagnetic wave detection apparatus 10, a principal ray of each angle of view at the first image forming unit 15 has relatively small spread from the principal axis, as illustrated in FIG. 7. Accordingly, the electromagnetic wave detection apparatus 10 can suppress the spread of electromagnetic waves that progress toward the second image forming unit 19 and the third image forming unit 21 from the reference surface ss. As a result, the electromagnetic wave detection apparatus 10 can avoid enlargement of the second image forming unit 19 and the third image forming unit 21 that cause electromagnetic waves incident on the progression unit 18 to be incident thereon without causing vignetting. Thus, the electromagnetic wave detection apparatus 10 can homogenize the intensity of electromagnetic waves of the secondary images formed by the second image forming unit 19 and the third image forming unit 21, without enlarging the electromagnetic wave detection apparatus 10 in its entirety. Such configuration and effect are applicable also to an electromagnetic wave detection apparatus according to a second embodiment, which will be described later.

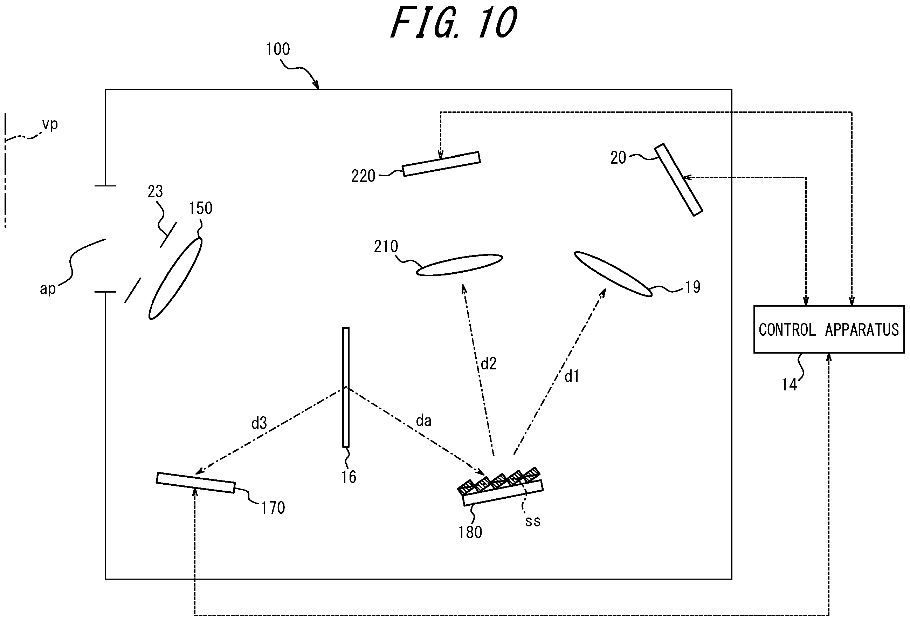

In the electromagnetic wave detecting apparatus 10, further, the first aperture 23 and the first image forming unit 15 are arranged to constitute the image-side telecentric optical system. The electromagnetic wave detecting apparatus 10 having this configuration enables minimization of the spread of electromagnetic waves that progress in the progression unit direction da from the reference surface ss. Accordingly, the electromagnetic wave detection apparatus 10 can homogenize the intensity of electromagnetic waves of the secondary images formed by the second image forming unit 19 and the third image forming unit 21 while avoiding enlargement of the electromagnetic wave detection apparatus 10 in its entirety. Such configuration and effect are applicable also to the electromagnetic wave detection apparatus according to Fig. 10, which will be described later.

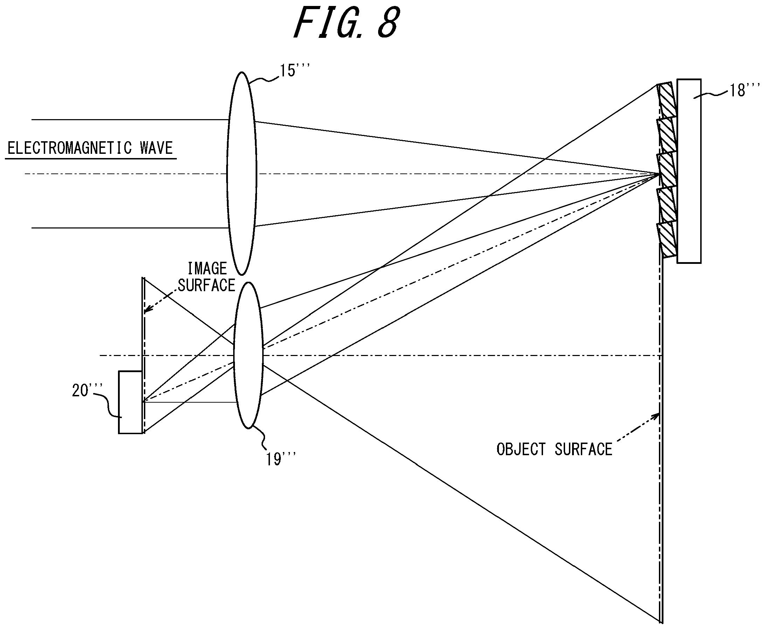

In the electromagnetic wave detecting apparatus 10 of an embodiment, further, the progression unit 18, the second image forming unit 19, and the first detector 20 are arranged such that the extension surface of the reference surface ss and the extension surface of the detection surface of the first detector 20 intersect each other and the principal axis of the second image forming unit 19 passes through the reference surface ss and the detection surface of the first detector 20. As a configuration different from the electromagnetic wave detection apparatus 10, a configuration illustrated in FIG. 8 in which a principal plane of a primary image forming optical system 15‴ for forming an image of electromagnetic waves on a reference surface of a progression unit 18‴, a reference surface of the progression unit 18‴, a principal plane of a secondary image forming optical system 19‴, and a detection surface of a detector 20‴ are parallel to one another may be conceived. In this configuration, a range of an angle of view of the secondary image forming optical system 19‴ spaced apart from the principal axis is used for detection. Generally, a resolution in a range of an angle of view spaced apart from a principal axis of an image forming system is lower than that of around the principal axis. On the other hand, the first embodiment has the above configuration in which the reference surface ss of the progression unit 18, the principal plane of the second image forming unit 19, and the detection surface of the first detector 20 can be arranged in a manner so as to satisfy the Scheimpflug principle. Accordingly, in the electromagnetic wave detection apparatus 10, even when the second image forming unit 19 is deviated from the location opposing the progression unit 18, an image of electromagnetic waves in the vicinity of the principal axis of the second image forming unit 19 associated with an image formed by the first image forming unit 15 on the reference surface ss can be included in the detection surface of the first detector 20 and formed. Thus, the electromagnetic wave detection apparatus 10 can improve the resolution of the image of electromagnetic waves detected by the first detector 20. Such configuration and effect are applicable also to the electromagnetic wave detection apparatus according to the second embodiment, which will be described later.

In the electromagnetic wave detection apparatus 10, the principal axis of the second image forming unit 19 passes through the center of the reference surface ss and the center of the detection surface of the first detector 20. The electromagnetic wave detection apparatus 10 having this configuration can cause an image of electromagnetic waves in a region close to the principal axis of the second image forming unit 19 to be preferentially included in the detection surface of the first detector 20 and formed. Thus, the electromagnetic wave detection apparatus 10 can maximize the resolution of the image of electromagnetic waves detected by the first detector 20. Such configuration and effect are applicable also to the electromagnetic wave detection apparatus according to the second embodiment, which will be described later.

In the electromagnetic wave detection apparatus 10 of an embodiment, the extension surface of the reference surface ss, the extension surface of the principal plane of the second image forming unit 19, and the extension surface of the detection surface of the first detector 20 intersect one another on the same straight line. In the electromagnetic wave detection apparatus 10 having this configuration, the reference surface ss of the progression unit 18, the principal plane of the second image forming unit 19, and the detection surface of the first detector 20 satisfy the Scheimpflug principle. Accordingly, the electromagnetic wave detection apparatus 10 reliably improves the resolution of the image of electromagnetic waves detected by the first detector 20. Such configuration and effect are applicable also to the electromagnetic wave detection apparatus according to the second embodiment, which will be described later.

In the electromagnetic wave detection apparatus 10 of an embodiment, electromagnetic waves can be switched between the first state and the second state for each of the pixels px. The electromagnetic wave detection apparatus 10 having this configuration can cause the principal axis of the first image forming unit 15 to coincide with the principal axis of the second image forming unit 19 in the first direction d1 in which electromagnetic waves are caused to progress in the first state and the principal axis of the third image forming unit 21 in the second direction d2 in which electromagnetic waves are caused to progress in the second state. Thus, the electromagnetic wave detection apparatus 10 can suppress a deviation between the principal axis of the first detector 20 and the principal axis of the second detector 22 by switching the pixels px of the progression unit 18 to one of the first state and the second state. In this way, the electromagnetic wave detection apparatus 10 can suppress a deviation between coordinate systems in a detection result by the first detector 20 and a detection result by the second detector 22. Such configuration and effect are applicable also to the electromagnetic wave detection apparatus that will be described later.

The electromagnetic wave detection apparatus 10 of an embodiment includes the third image forming unit 21 and the second detector 22. The electromagnetic wave detection apparatus 10 having this configuration can enable the second detector 22 to detect information based on electromagnetic waves from each portion of the object ob that reflects electromagnetic waves to be incident on each of the pixels px. Such configuration and effect are applicable also to the electromagnetic wave detection apparatus that will be described later.

In the electromagnetic wave detection apparatus 10, the progression unit 18, the third image forming unit 21, and the second detector 22 are arranged such that the extension surface of the reference surface ss, the extension surface of the principal plane of the third image forming unit 21, and the extension surface of the detection surface of the second detector 22 intersect one another on the same straight line. This configuration enables the arrangement of the reference surface ss, the principal plane of the third image forming unit 21, and the detection surface of the second detector 22 that satisfies the Scheimpflug principle. Thus, in the electromagnetic wave detection apparatus 10, even when the third image forming unit 21 is deviated from the location opposing the progression unit 18, an image of electromagnetic waves in the vicinity of the principal axis of the third image forming unit 21 may be detected on the detection surface of the second detector 22. Accordingly, the electromagnetic wave detection apparatus 10 can improve the resolution of the image of electromagnetic waves detected by the second detector 22.

In the electromagnetic wave detection apparatus 10 of an embodiment, electromagnetic waves progressing from the first image forming unit 15 are separated into electromagnetic waves progressing in the progression unit direction da and electromagnetic waves progressing in the third direction d3. The electromagnetic wave detection apparatus 10 having this configuration can cause the principal axis of the first image forming unit 15 to coincide with the central axis of electromagnetic waves caused to progress in the progression unit direction da and the central axis of electromagnetic waves caused to progress in the third direction d3. Thus, the electromagnetic wave detection apparatus 10 can suppress a deviation between the coordinate systems of the first detector 20 and the second detector 22 and the coordination system of the third detector 17. Such configuration and effect are applicable also to the electromagnetic wave detection apparatus, that will be described later.

The electromagnetic wave detection apparatus 10 of an embodiment includes the third detector 17. The electromagnetic wave detection apparatus 10 having this configuration can separately detect electromagnetic waves of an image the same as the image formed by the first detector 20. Such configuration and effect are applicable also to the electromagnetic wave detection apparatus that will be described later.

In the electromagnetic wave detection apparatus 10, the first image forming unit 15 is a retrofocus lens system. In the electromagnetic wave detection apparatus 10 having this configuration, the first image forming unit 15 has a short focal length and a long flange focal distance. Thus, the electromagnetic wave detection apparatus 10 can reduce the probability of interference between electromagnetic waves progressing in the first direction d1 or the second direction d2 by the progression unit 18 and the first image forming unit 15, while employing the first image forming unit 15 having a wide angle.

In the information acquisition system 11 of an embodiment, the control apparatus 14 acquires the information regarding the surroundings of the electromagnetic wave detection apparatus 10, based on electromagnetic waves respectively detected by the first detector 20, the second detector 22, and the third detector 17. The information acquisition system 11 having this configuration can provide useful information based on detected electromagnetic waves.

Next, the electromagnetic wave detection apparatus according to the second embodiment of the present disclosure will be described. In the second embodiment, the orientations of the progression unit and the third detector with respect to the first image forming unit are different from those of the first embodiment, and the locations and the orientations of the third image forming unit and the second detector with respect to the progression unit are different from those of the first embodiment. Hereinafter, the second embodiment will be described focusing on aspects different from the first embodiment. Note that elements having the same configurations of the elements of the first embodiment will be denoted by the same reference signs.

An electromagnetic wave detection apparatus 100 according to the second embodiment includes the first aperture 23, a first image forming unit 150, the separator 16, a progression unit 180, the second image forming unit 19, the first detector 20, a third image forming unit 210, a second detector 220, and a third detector 170, as illustrated in FIG. 10. Note that the information acquisition system 11 of the second embodiment has the same configuration as that of the first embodiment, except for the configuration of the electromagnetic wave detection apparatus 100. The configurations and functions of the first aperture 23, the separator 16, the second image forming unit 19, and the first detector 20 are the same as those of the first embodiment.

In the second embodiment, the first image forming unit 150 can be arranged such that a principal axis thereof is inclined with respect to the axis of the aperture ap and, simultaneously, passes through the aperture ap, in a manner different from the first embodiment. The configuration and the function of the first image forming unit 150 are the same as those of the first image forming unit 15 of the first embodiment.

In the second embodiment, the progression unit 180 may be arranged in a manner different from the first embodiment, such that the reference surface ss is inclined with respect to a virtual plane vp on which a principal axis of the first image forming unit 150 extends, that is, such that an extension surface of the virtual plane vp and an extension surface of the reference surface ss intersect each other. Note that the virtual plane vp may be a plane that is spaced apart from the first image forming unit 150 by a predetermined distance and perpendicular to the axis of the aperture ap. The predetermined distance is a distance to an object surface from the first image forming unit 150 that is located at a predetermined distance from the progression unit 180 and uses the reference surface ss as an image surface.

The progression unit 180 may be arranged such that an extension surface of the principal plane of the first image forming unit 150 and an extension surface of the reference surface ss of the progression unit 180 intersect each other, that is, such that the reference surface ss is inclined with respect to the principal plane of the first image forming unit 150. Such an inclined arrangement in which the reference surface ss is inclined with respect to the principal plane of the first image forming unit 150 means, in a case in which the separator 16 refracts the electromagnetic waves into the progression unit direction da for the separation, an inclined arrangement in which the reference surface ss of the progression unit 180 rotated about the location of the separator 16 by an amount ("angle of incidence" - "refraction angle") in a direction opposite to the refraction is inclined with respect to the principal plane of the first image forming unit 150. Such an inclined arrangement in which the reference surface ss is inclined with respect to the principal plane of the first image forming unit 150 means, in a case in which the separation in the progression unit direction da by the separator 16 is performed by reflection, an inclined arrangement in which the reference surface ss in a plane-symmetrical orientation with respect to the reflection surface of the separator 16 is inclined with respect to the principal plane of the first image forming unit 150.

The progression unit 180 may be arranged such that the principal axis of the first image forming unit 150 passes within a region of the reference surface ss of the progression unit 180. Further, the progression unit 180 may be arranged such that the principal axis of the first image forming unit 150 passes the center of the reference surface ss of the progression unit 180.

The progression unit 180 may be arranged such that the extension surface of the reference surface ss intersect the principal plane of the first image forming unit 150 and the virtual plane vp on one straight line. Thus, the principal plane of the first image forming unit 150, the reference surface ss, and the virtual plane vp are arranged in a manner so as to satisfy the Scheimpflug principle.

Further, the progression unit 180 may be arranged such that the second direction d2 in which the progression unit 180 causes progression is perpendicular to the reference surface ss. The configuration and the function of the progression unit 180 other than the orientation described above are the same as the progression unit 18 of the first embodiment.

The second image forming unit 19 may be arranged in the first direction d1 in which the progression unit 180 causes progression such that the principal plane thereof is inclined with respect to the reference surface ss of the progression unit 180, in a manner similar to the first embodiment. Other arrangement conditions, configurations, and functions of the second image forming unit 19 of the second embodiment are the same as the second image forming unit 19 of the first embodiment.

The first detector 20 is arranged at or in the vicinity of the secondary image forming location of the second image forming unit 19 for an image of electromagnetic waves formed on the reference surface ss of the progression unit 180, in a manner similar to the first embodiment. The first detector 20 may be arranged in a manner similar to the first embodiment, such that the extension surface of the detection surface of the first detector 20 intersects the extension surface of the reference surface ss and the extension surface of the principal plane of the second image forming unit 19 on one straight line. The reference surface ss, the principal plane of the second image forming unit 19, and the detection surface of the first detector 20 may be arranged in a manner so as to satisfy the Scheimpflug principle, in a manner similar to the first embodiment. Other arrangement conditions, configurations, and functions of the first detector 20 are the same as the first detector 20 of the first embodiment.

The third image forming unit 210 may be arranged such that the principal plane thereof is parallel to the reference surface ss of the progression unit 180, in a manner different from the apparatus according to Fig. 4. Other arrangement conditions, configurations, and functions of the third image forming unit 210 of the second embodiment are the same as the third image forming unit 21 of the first embodiment.

The second detector 220 may be arranged such that the detection surface thereof is perpendicular to the principal axis of the third image forming unit 210, in a manner different from the first embodiment. Other arrangement conditions, configurations, and functions of the second detector 220 of the second embodiment are the same as the second detector 22 of the first embodiment.

The third detector 170 may be arranged such that the extension surface of the first image forming unit 150 and the extension surface of the detection surface of the third detector 170 intersect each other, in a manner different from the first embodiment. That is, the detection surface may be arranged to incline with respect to the principal plane of the first image forming unit 150. Such an inclined arrangement of the detection surface inclined with respect to the principal plane of the first image forming unit 150 means, in a case in which the separator 16 separates electromagnetic waves in the third direction d3 by refraction, an inclined arrangement in which the detection surface of the third detector 170 rotated about the location of the separator 16 by the amount ("angle of incidence" - "refraction angle") in a direction opposite to the refraction is inclined with respect to the principal plane of the first image forming unit 150. Also, such an inclined arrangement of the detection surface inclined with respect to the principal plane of the first image forming unit 150 means, in a case in which the separator 16 reflects the electromagnetic waves into the third direction d3 for the separation, an inclined arrangement in which the detection surface in a plane-symmetry orientation with respect to the reflection surface of the separator 16 is inclined with respect to the principal plane of the first image forming unit 150.

The third detector 170 and the first image forming unit 150 may be arranged such that the extension surface of the principal plane of the first image forming unit 150 and the extension surface of the detection surface of the third detector 170 intersect each other on the virtual plane vp. Thus, the principal plane of the first image forming unit 150, the detection surface of the third detector 170, and the virtual plane vp may be arranged in a manner so as to satisfy the Scheimpflug principle. Other arrangement conditions, configurations, and functions of the third detector 170 of the second embodiment are the same as the third detector 17 of the first embodiment.

As described above, in the electromagnetic wave detecting apparatus 100 of an embodiment, the extension surface of the reference surface ss and the extension surface of the virtual plane vp serving as the object surface of the first image forming unit 150, which is located at a predetermined distance from the progression unit 180 and uses the reference surface ss as the image surface, intersect each other, and the principal axis of the first image forming unit 150 passes through the reference surface ss. This configuration enables the arrangement in which the object surface located at the predetermined distance from the first image forming unit 150, the principal plane of the first image forming unit 150, the reference surface ss of the progression unit 180, the principal plane of the second image forming unit 19, and the detection surface of the first detector 20 satisfy the Scheimpflug principle. Thus, even when the electromagnetic wave detection apparatus 100 is configured such that the first image forming unit 150 is not arranged at the location opposing the progression unit 180, an image of electromagnetic waves of an object in the vicinity of the principal axis formed by the first image forming unit 150 on the virtual plane vp, on which the principal axis of the first image forming unit 150 passes, can be included in the reference surface ss and formed. In the electromagnetic wave detecting apparatus 100, thus, the third image forming unit 210 may be arranged at the location opposing the progression unit 180. As a result, the third image forming unit 210 can be arranged in such a manner that the reference surface ss of the progression unit 180 and the principal plane of the third image forming unit 210 are parallel to each other and, simultaneously, the principal axis of the third image forming unit 210 passes within the reference surface ss of the progression unit 180. In this arrangement of the electromagnetic wave detection apparatus 100, an image in a range of an angle of view in the vicinity of the principal axis of the third image forming unit 210 may be formed by the second detector 220. Thus, a resolution of an image of electromagnetic waves detected by the second detector 220 can be improved.

In the electromagnetic wave detection apparatus 100 of the second embodiment, as described above, the principal axis of the first image forming unit 150 passes through the center of the reference surface ss. The electromagnetic wave detection apparatus 100 having this configuration can cause an image of electromagnetic waves in a region close to the principal axis of the first image forming unit 150 to be incident on the reference surface ss of the progression unit 180. Thus, the electromagnetic wave detection apparatus 100 can propagate the image of the electromagnetic waves in the region close to the principal axis of the first image forming unit 150 to the first detector 20 and the second detector 220. Accordingly, the electromagnetic wave detection apparatus 100 can maximize a resolution of an image of the electromagnetic waves detected by the first detector 20 and the second detector 220.

In the electromagnetic wave detection apparatus 100 of an embodiment, further, the extension surface of the reference surface ss of the progression unit 180 and the extension surface of the principal plane of the first image forming unit 150 intersect each other on the same straight line. The electromagnetic wave detecting apparatus 100 having this configuration enables the arrangement in which the reference surface ss of the progression unit 180 and the principal plane of the first image forming unit 150 satisfy the Scheimpflug principle. Accordingly, the electromagnetic wave detection apparatus 100 can further improve a resolution of an image of electromagnetic waves detected by the first detector 20 and the second detector 220.

Although the disclosure has been described based on the figures and the embodiments, it is to be understood that various changes and modifications may be implemented based on the present disclosure by those who are ordinarily skilled in the art. Accordingly, such changes and modifications are included in the scope of the disclosure herein.

For example, although the irradiator 12, the reflector 13, and the control apparatus 14, together with the electromagnetic wave detection apparatus 10 or 100, constitute the information acquisition system 11, the electromagnetic wave detection apparatuses 10 and 100 may include at least one of them, e.g., the control apparatus 14 as a controller.

Although the progression unit 18 of and the progression unit 180 of the second embodiment can change the progression direction of electromagnetic waves incident on the reference surface ss between the two directions: the first direction d1 and the second direction d2, the progression units 18 and 180 may be able to change the progression direction between three or more directions, rather than two directions.

Although the first state of the progression units 18 and 180 refers the first reflection state for reflecting electromagnetic waves incident on the reference surface ss in the first direction d1, and the second state refers the second reflection state for reflecting electromagnetic waves incident on the reference surface ss in the second direction d2, these states may refer to other conditions.

For example, the first state may refer a passing state in which electromagnetic waves incident on the reference surface ss are caused to pass and progress in the first direction d1. In particular, each of the progression units 18 and 180 may include a shutter that is provided for each of the pixels px and has a reflection surface for reflecting electromagnetic waves in the second direction d2. The progression units 18 and 180 having this configuration can switch between the passing state or the transmission state serving as the first state and the reflection state serving as the second state, by opening or closing the shutter for each of the pixels px. The progression units 18 and 180 having such a configuration may include, for example, a MEMS shutter in which a plurality of shutters capable of opening and closing are arranged in an array on a plane.

Further, each of the progression units 18 and 180 may include a liquid crystal shutter that can be switched between the reflection state for reflecting electromagnetic waves and the transmission state for transmitting electromagnetic waves, in accordance with a liquid crystal alignment. The progression units 18 and 180 having this configuration can switch between the transmission state serving as the first state and the reflection state serving as the second state for each of the pixels px by switching the liquid crystal alignment for each of the pixels px.

The information acquisition system 11 has the configuration in which the reflector 13 scans a beam of an electromagnetic wave radiated by the irradiator 12, and the second detectors 22 and 220 function as scanning type active sensors in cooperation with the reflector 13. However, the information acquisition system 11 is not limited to this configuration. An effect similar to the first embodiment can be obtained by, for example, the information acquisition system 11 in which the reflector 13 is omitted and the irradiator 12 radiates electromagnetic waves and information is acquired without scanning.

The information acquisition system 11 has the configuration in which the first detector 20 and the third detectors 17 and 170 serve as passive sensors, and the second detector 220 serves as an active sensor. However, the information acquisition system 11 is not limited to this configuration. An effect similar to the apparatus according to Fig. 4 and Fig. 5 can be obtained by, for example, the information acquisition system 11 in which the first detector 20, the second detectors 22 and 220, and the third detectors 17 and 170 all serve as active sensors or passive sensors, or one of them serves as a passive sensor.

### REFERENCE SIGNS LIST

- 10,100: electromagnetic wave detection apparatus
- 11: information acquisition system
- 12: irradiator
- 13: reflector
- 14: controller
- 15: first image forming unit
- 15', 15", 15‴: primary image forming optical system
- 16: separator
- 17: third detector
- 18, 180, 18', 18‴: progression unit
- 19: second image forming unit
- 19', 19", 19‴: secondary image forming optical system
- 20: first detector
- 20‴: detector
- 21: third image forming unit
- 22: second detector
- 23: first aperture
- ap: aperture
- da: progression unit direction
- d1, d2, d3: first direction, second direction, third direction
- ob: object
- px: pixel
- ss: action surface
- vp: virtual plane

## Claims

1. An electromagnetic wave detection apparatus (10, 100) comprising:
a first image forming unit (15, 150) configured to form an image of incident electromagnetic waves;
a progression unit (18, 18', 18"', 180) that includes a plurality of pixels (px) arranged along a reference surface (ss) and is configured to cause electromagnetic waves incident on the reference surface (ss) from the first image forming unit (15, 150) to progress in a first direction (d1) using each of the pixels (px);
a second image forming unit (19) configured to form an image of electromagnetic waves progressing in the first direction (d1); and
a first detector (20) configured to detect incident electromagnetic waves from the second image forming unit (19),
wherein an angle formed by a progression axis at each angle of view of electromagnetic waves that have passed the first image forming unit (15, 150) and a principal axis of the first image forming unit (15, 150) is equal to or smaller than a predetermined value,
wherein the electromagnetic wave detection apparatus (10, 100) further comprises a first aperture (23) that is arranged in the vicinity of a front focal point of the first image forming unit (15, 150) and allows some incident electromagnetic waves to pass through,
wherein the first image forming unit (15, 150) forms an image of incident electromagnetic waves from the first aperture (23),
wherein the first aperture (23) and the first image forming unit (15, 150) constitute an image side telecentric optical system, and
wherein the first image forming unit (15, 150) is configured such that the progression axes at each of the angles of view of the electromagnetic waves that have passed the first image forming unit (15, 150) and are incident on the progression unit (18, 18', 18"', 180) are approximately parallel to one another.

2. The electromagnetic wave detection apparatus (10, 100) according to claim 1,
wherein a predetermined value is 15°.

3. The electromagnetic wave detection apparatus (10, 100) according to claim 1 or 2,
wherein at least one of:
an arrangement in which an extension surface of a reference surface (ss) and an extension surface of a detection surface of the first detector (20) intersect each other, and a principal axis of the second image passes through the reference surface (ss) and a detection surface of the first detector (20), and
an arrangement in which an extension surface of an object surface of the first image forming unit (15, 150) that is arranged at a predetermined distance from the progression unit (18, 18', 18"', 180) and uses the reference surface (ss) as an image surface and an extension surface of the reference surface (ss) intersect each other, and a principal axis of the first image forming unit (15, 150) passes through the reference surface (ss),
is satisfied.

4. The electromagnetic wave detection apparatus (10, 100) according to any one of claims 1 to 3,
wherein the progression unit (18, 18', 18"', 180) can switch each of the pixels (px) between a first state in which electromagnetic waves incident on the reference surface (ss) from the first image forming unit (15, 150) are caused to progress in a first direction (d1) and a second state in which electromagnetic waves are caused to progress in a second direction (d2).

5. The electromagnetic wave detection apparatus (10, 100) according to claim 4,
further comprising:
a third image forming unit (21, 210) configured to form an image of electromagnetic waves progressing in the second direction (d2); and
a second detector (22, 220) configured to detect incident electromagnetic waves from the third image forming unit (21, 210).

6. The electromagnetic wave detection apparatus (10, 100) according to claim 5,
wherein an extension surface of the reference surface (ss), an extension surface of a principal plane of the third image forming unit (21, 210), and an extension surface of a detection surface of the second detector (22, 220) intersect one another on the same straight line.

7. The electromagnetic wave detection apparatus (10, 100) according to any one of claims 1 to 6,
further comprising a separator (16) for separating incident electromagnetic waves from the first image forming unit (15, 150), such that electromagnetic waves progress toward the progression unit (18, 18', 18"', 180) and in a third direction (d3).

8. The electromagnetic wave detection apparatus (10, 100) according to claim 7,
wherein the separator (16) separates incident electromagnetic waves from the first image forming unit (15, 150), such that electromagnetic waves of a first frequency progress toward the progression unit (18, 18', 18"', 180) and electromagnetic waves of a second frequency progress in the third direction (d3).

9. The electromagnetic wave detection apparatus (10, 100) according to claim 7 or 8,
wherein the separator (16) includes at least one of a half mirror, a beam splitter, a dichroic mirror, a cold mirror, a hot mirror, a meta surface, a deflection element, and a prism.

10. The electromagnetic wave detection apparatus (10, 100) according to any one of claims 7 to 9,
further comprising a third detector (17, 170) configured to detect electromagnetic waves progressing in the third direction (d3).

11. The electromagnetic wave detection apparatus (10, 100) according to claim 10,
further comprising a controller (14) configured to acquire information regarding a subject in the surroundings, based on electromagnetic waves detected by the third detector (17, 170).

12. An information acquisition system (11) comprising:
the electromagnetic wave detection apparatus (10, 100) according to claim 10; and
a control apparatus (14) configured to acquire information regarding a subject in the surroundings of the electromagnetic wave detection apparatus (10, 100), based on electromagnetic waves detected by the third detector (17, 170).

13. The electromagnetic wave detection apparatus (10, 100) according to claim 1, further comprising:
an irradiator (12) configured to radiate electromagnetic waves to an object (ob); and
a first aperture (23) configured to allow some electromagnetic waves incident on the first aperture (23) to pass through the first aperture (23), the first aperture (23) functioning as a diaphragm,
wherein the first image forming unit (15, 150) is configured to guide, to the progression unit (18, 18', 18"', 180), the electromagnetic waves that have been reflected by the object (ob) and have passed through the first aperture (23), and
the progression unit (18, 18', 18"', 180) is included in the image side telecentric optical system.

14. The electromagnetic wave detection apparatus (10, 100) according to claim 1, further comprising:
an irradiator (12) configured to radiate electromagnetic waves to an object (ob); and
a first aperture (23) configured to allow some electromagnetic waves incident on the first aperture (23) to pass through the first aperture (23), the first aperture (23) functioning as a diaphragm,
wherein the first image forming unit (15, 150) is configured to guide, to the progression unit (18, 18', 18"', 180), the electromagnetic waves that have been reflected by the object (ob) and have passed through the first aperture (23), and
an angle formed by the electromagnetic waves to be output from the first image forming unit (15, 150) and a principal axis of the first image forming unit (15, 150) is equal to an angle formed by the electromagnetic waves incident on the progression unit (18, 18', 18"', 180) and the principal axis of the first image forming unit (15, 150) intersecting the progression unit (18, 18', 18"', 180).

15. The electromagnetic wave detection apparatus (10, 100) according to claim 1, wherein the first image forming unit (15, 150) is a lens.

## Patentansprüche

1. Elektromagnetische-Welle-Detektionsvorrichtung (10, 100), aufweisend:
eine erste Bilderzeugungseinheit (15, 150), die konfiguriert ist, um ein Bild von einfallenden elektromagnetischen Wellen zu bilden,
eine Progressionseinheit (18, 18', 18‴, 180), die eine Mehrzahl von Pixeln (px) aufweist, die entlang einer Referenzfläche (ss) angeordnet sind, und die konfiguriert ist, um zu bewirken, dass elektromagnetische Wellen, die von der ersten Bilderzeugungseinheit (15, 150) aus auf die Referenzfläche (ss) einfallen, sich mittels jedes der Pixel (px) in einer ersten Richtung (d1) ausbreiten,
eine zweite Bilderzeugungseinheit (19), die konfiguriert ist, um ein Bild von elektromagnetischen Wellen zu bilden, die sich in der ersten Richtung (d1) ausbreiten, und
einen ersten Detektor (20), der konfiguriert ist, um einfallende elektromagnetische Wellen von der zweiten Bilderzeugungseinheit (19) zu detektieren,
wobei ein Winkel, der durch eine Progressionsachse bei jedem Betrachtungswinkel von elektromagnetischen Wellen, die die erste Bilderzeugungseinheit (15, 150) passiert haben, und eine Hauptachse der ersten Bilderzeugungseinheit (15, 150) gebildet wird, gleich oder kleiner als ein vorbestimmter Wert ist,
wobei die Elektromagnetische-Welle-Detektionsvorrichtung (10, 100) ferner eine erste Öffnung (23) aufweist, die in der Nachbarschaft eines vorderen Fokalpunkts der ersten Bilderzeugungseinheit (15, 150) angeordnet ist und ermöglicht, dass einige einfallende elektromagnetische Wellen hindurchtreten,
wobei die erste Bilderzeugungseinheit (15, 150) ein Bild von einfallenden elektromagnetischen Wellen von der ersten Öffnung (23) erzeugt,
wobei die erste Öffnung (23) und die erste Bilderzeugungseinheit (15, 150) ein bildseitiges telezentrisches optisches System bilden, und
wobei die erste Bilderzeugungseinheit (15, 150) so konfiguriert ist, dass die Progressionsachsen bei jedem der Betrachtungswinkel der elektromagnetischen Wellen, die die erste Bilderzeugungseinheit (15, 150) passiert haben und auf die Progressionseinheit (18, 18', 18‴, 180) einfallen, ungefähr parallel zueinander sind.

2. Elektromagnetische-Welle-Detektionsvorrichtung (10, 100) gemäß Anspruch 1,
wobei ein vorbestimmter Wert 15° beträgt.

3. Elektromagnetische-Welle-Detektionsvorrichtung (10, 100) gemäß Anspruch 1 oder 2, wobei mindestens eines von:
einer Anordnung, bei der eine Erweiterungsfläche einer Referenzfläche (ss) und eine Erweiterungsfläche einer Detektionsfläche des ersten Detektors (20) einander schneiden, und eine Hauptachse des zweiten Bildes durch die Referenzfläche (ss) und eine Detektionsfläche des ersten Detektors (20) hindurchtritt, und
einer Anordnung, bei der eine Erweiterungsfläche einer Objektfläche der ersten Bilderzeugungseinheit (15, 150), die in einem vorbestimmten Abstand von der Progressionseinheit (18, 18', 18‴, 180) angeordnet ist und die Referenzfläche (ss) als Bildfläche verwendet, und eine Erweiterungsfläche der Referenzfläche (ss) einander schneiden, und eine Hauptachse der ersten Bilderzeugungseinheit (15, 150) durch die Referenzfläche (ss) hindurchtritt,
erfüllt ist.

4. Elektromagnetische-Welle-Detektionsvorrichtung (10, 100) gemäß irgendeinem der Ansprüche 1 bis 3,
wobei die Progressionseinheit (18, 18', 18‴, 180) jedes der Pixel (px) zwischen einem ersten Zustand, in dem elektromagnetische Wellen, die von der ersten Bilderzeugungseinheit (15, 150) auf die Referenzfläche (ss) einfallen, veranlasst werden, sich in einer ersten Richtung (d1) auszubreiten, und einem zweiten Zustand, in dem elektromagnetische Wellen veranlasst werden, sich in einer zweiten Richtung (d2) auszubreiten, umschalten kann.

5. Elektromagnetische-Welle-Detektionsvorrichtung (10, 100) gemäß Anspruch 4,
ferner aufweisend:
eine dritte Bilderzeugungseinheit (21, 210), die konfiguriert ist, um ein Bild von elektromagnetischen Wellen zu erzeugen, die sich in der zweiten Richtung (d2) ausbreiten, und
einen zweiten Detektor (22, 220), der konfiguriert ist, um einfallende elektromagnetische Wellen von der dritten Bilderzeugungseinheit (21, 210) zu detektieren.

6. Elektromagnetische-Welle-Detektionsvorrichtung (10, 100) gemäß Anspruch 5,
wobei eine Erweiterungsfläche der Referenzfläche (ss), eine Erweiterungsfläche einer Hauptebene der dritten Bilderzeugungseinheit (21, 210) und eine Erweiterungsfläche einer Detektionsfläche des zweiten Detektors (22, 220) einander auf der gleichen geraden Linie schneiden.

7. Elektromagnetische-Welle-Detektionsvorrichtung (10, 100) gemäß irgendeinem der Ansprüche 1 bis 6,
ferner aufweisend einen Separator (16) zum Trennen einfallender elektromagnetischer Wellen aus der ersten Bilderzeugungseinheit (15, 150), so dass elektromagnetische Wellen sich in Richtung zu der Progressionseinheit (18, 18', 18‴, 180) und in einer dritten Richtung (d3) ausbreiten.

8. Elektromagnetische-Welle-Detektionsvorrichtung (10, 100) gemäß Anspruch 7,
wobei der Separator (16) einfallende elektromagnetische Wellen aus der ersten Bilderzeugungseinheit (15, 150) trennt, so dass elektromagnetische Wellen einer ersten Frequenz sich in Richtung zu der Progressionseinheit (18, 18', 18‴, 180) ausbreiten und elektromagnetische Wellen einer zweiten Frequenz sich in der dritten Richtung (d3) ausbreiten.

9. Elektromagnetische-Welle-Detektionsvorrichtung (10, 100) gemäß Anspruch 7 oder 8,
wobei der Separator (16) mindestens eines von einem Halbspiegel, einem Strahlteiler, einem dichroitischen Spiegel, einem Kaltlichtspiegel, einem Heißlichtspiegel, einer Meta-Fläche, einem Ablenkelement und einem Prisma aufweist.

10. Elektromagnetische-Welle-Detektionsvorrichtung (10, 100) gemäß irgendeinem der Ansprüche 7 bis 9,
ferner aufweisend einen dritten Detektor (17, 170), der konfiguriert ist, um elektromagnetische Wellen zu detektieren, die sich in der dritten Richtung (d3) ausbreiten.

11. Elektromagnetische-Welle-Detektionsvorrichtung (10, 100) gemäß Anspruch 10,
ferner aufweisend einen Controller (14), der konfiguriert ist, um eine Information bezüglich eines/einer Gegenstandes/Person in der Umgebung basierend auf elektromagnetischen Wellen, die durch den dritten Detektor (17, 170) detektiert werden, zu erlangen.

12. Informationserlangungssystem (11), aufweisend:
die Elektromagnetische-Welle-Detektionsvorrichtung (10, 100) gemäß Anspruch 10 und
eine Steuervorrichtung (14), die konfiguriert ist, um eine Information bezüglich eines/einer Gegenstandes/Person in der Umgebung der Elektromagnetische-Welle-Detektionsvorrichtung (10, 100) basierend auf elektromagnetischen Wellen, die durch den dritten Detektor (17, 170) detektiert werden, zu erlangen.

13. Elektromagnetische-Welle-Detektionsvorrichtung (10, 100) gemäß Anspruch 1, ferner aufweisend:
eine Bestrahlungseinrichtung (12), die konfiguriert ist, um elektromagnetische Wellen auf ein Objekt (ob) zu strahlen, und
eine erste Öffnung (23), die konfiguriert ist, um zu ermöglichen, dass einige auf die erste Öffnung (23) einfallende elektromagnetische Wellen durch die erste Öffnung (23) hindurchtreten, wobei die erste Öffnung (23) als Blende funktioniert,
wobei die erste Bilderzeugungseinheit (15, 150) konfiguriert ist, um die elektromagnetischen Wellen, die von dem Objekt (ob) reflektiert wurden und durch die erste Öffnung (23) hindurchgetreten sind, zu der Progressionseinheit (18, 18', 18‴, 180) zu leiten, und
die Progressionseinheit (18, 18', 18‴, 180) in dem bildseitigen telezentrischen optischen System enthalten ist.

14. Elektromagnetische-Welle-Detektionsvorrichtung (10, 100) gemäß Anspruch 1, ferner aufweisend:
eine Bestrahlungseinrichtung (12), die konfiguriert ist, um elektromagnetische Wellen auf ein Objekt (ob) zu strahlen, und
eine erste Öffnung (23), die konfiguriert ist, um zu ermöglichen, dass einige auf die erste Öffnung (23) einfallende elektromagnetische Wellen durch die erste Öffnung (23) hindurchtreten, wobei die erste Öffnung (23) als Blende funktioniert,
wobei die erste Bilderzeugungseinheit (15, 150) konfiguriert ist, um die elektromagnetischen Wellen, die von dem Objekt (ob) reflektiert wurden und durch die erste Öffnung (23) hindurchgetreten sind, zu der Progressionseinheit (18, 18', 18‴, 180) zu leiten, und
ein Winkel, der durch die von der ersten Bilderzeugungseinheit (15, 150) auszugebenden elektromagnetischen Wellen und eine Hauptachse der ersten Bilderzeugungseinheit (15, 150) gebildet wird, gleich einem Winkel ist, der durch die auf die Progressionseinheit (18, 18', 18‴, 180) einfallenden elektromagnetischen Wellen und die Hauptachse der ersten Bilderzeugungseinheit (15, 150) gebildet wird, die die Progressionseinheit (18, 18', 18‴, 180) schneidet.

15. Elektromagnetische-Welle-Detektionsvorrichtung (10, 100) gemäß Anspruch 1, wobei die erste Bilderzeugungseinheit (15, 150) eine Linse ist.

## Revendications

1. Dispositif de détection d'ondes électromagnétiques (10, 100), comprenant :
une première unité de formation d'image (15, 150) configurée pour former une image d'ondes électromagnétiques incidentes,
une unité de progression (18, 18' 18‴, 180) comprenant une pluralité de pixels (px) disposés le long d'une surface de référence (ss) et configurée pour faire en sorte que des ondes électromagnétiques incidentes sur la surface de référence (ss) à partir de la première unité de formation d'image (15, 150) se propagent dans une première direction (d1) au moyen de chacun des pixels (px),
une deuxième unité de formation d'image (19) configurée pour former une image d'ondes électromagnétiques se propageant dans la première direction (d1), et
un premier détecteur (20) configuré pour détecter des ondes électromagnétiques incidentes provenant de la deuxième unité de formation d'image (19),
dans lequel un angle formé par un axe de progression à chaque angle de vue d'ondes électromagnétiques ayant passé la première unité de formation d'image (15, 150) et un axe principal de la première unité de formation d'image (15, 150) est égal ou inférieur à une valeur prédéterminée,
dans lequel le dispositif de détection d'ondes électromagnétiques (10, 100) comprend en outre une première ouverture (23) située au voisinage d'un point focal avant de la première unité de formation d'image (15, 150) et permettant à certaines ondes électromagnétiques incidentes de passer à travers,
dans lequel la première unité de formation d'image (15, 150) forme une image d'ondes électromagnétiques incidentes à partir de la première ouverture (23),
dans lequel la première ouverture (23) et la première unité de formation d'image (15, 150) constituent un système optique télécentrique côté image, et
dans lequel la première unité de formation d'image (15, 150) est configurée de telle sorte que les axes de progression sont approximativement parallèles les uns aux autres à chacun des angles de vue des ondes électromagnétiques qui ont passé la première unité de formation d'image (15, 150) et qui sont incidentes sur l'unité de progression (18, 18', 18‴, 180).

2. Dispositif de détection d'ondes électromagnétiques (10, 100) selon la revendication 1,
dans lequel une valeur prédéterminée est de 15°.

3. Dispositif de détection d'ondes électromagnétiques (10, 100) selon la revendication 1 ou 2,
dans lequel au moins un parmi :
un agencement dans lequel une surface d'extension d'une surface de référence (ss) et une surface d'extension d'une surface de détection du premier détecteur (20) se coupent l'une l'autre, et un axe principal de la deuxième image passe à travers la surface de référence (ss) et une surface de détection du premier détecteur (20), et
un agencement dans lequel une surface d'extension d'une surface d'objet de la première unité de formation d'image (15, 150), qui est disposée à une distance prédéterminée de l'unité de progression (18, 18', 18‴, 180) et utilise la surface de référence (ss) comme surface d'image, et une surface d'extension de la surface de référence (ss) se coupent l'une l'autre, et un axe principal de la première unité de formation d'image (15, 150) passe à travers la surface de référence (ss),
est satisfait.

4. Dispositif de détection d'ondes électromagnétiques (10, 100) selon l'une quelconque des revendications 1 à 3,
dans lequel l'unité de progression (18, 18', 18''', 180) peut commuter chacun des pixels (px) entre un premier état dans lequel des ondes électromagnétiques incidentes sur la surface de référence (ss) depuis la première unité de formation d'image (15, 150) sont amenées à se propager dans une première direction (d1) et un deuxième état dans lequel des ondes électromagnétiques sont amenées à se propager dans une deuxième direction (d2).

5. Dispositif de détection d'ondes électromagnétiques (10, 100) selon la revendication 4,
comprenant en outre :
une troisième unité de formation d'image (21, 210) configurée pour former une image d'ondes électromagnétiques se propageant dans la deuxième direction (d2), et
un deuxième détecteur (22, 220) configuré pour détecter des ondes électromagnétiques incidentes provenant de la troisième unité de formation d'image (21, 210).

6. Dispositif de détection d'ondes électromagnétiques (10, 100) selon la revendication 5,
dans lequel une surface d'extension de la surface de référence (ss), une surface d'extension d'un plan principal de la troisième unité de formation d'image (21, 210) et une surface d'extension d'une surface de détection du deuxième détecteur (22, 220) se coupent l'une l'autre sur la même ligne droite.

7. Dispositif de détection d'ondes électromagnétiques (10, 100) selon l'une quelconque des revendications 1 à 6,
comprenant en outre un séparateur (16) pour séparer des ondes électromagnétiques incidentes provenant de la première unité de formation d'image (15, 150), de sorte que des ondes électromagnétiques se propagent vers l'unité de progression (18, 18', 18‴, 180) et dans une troisième direction (d3).

8. Dispositif de détection d'ondes électromagnétiques (10, 100) selon la revendication 7,
dans lequel le séparateur (16) sépare des ondes électromagnétiques incidentes provenant de la première unité de formation d'image (15, 150), de sorte que des ondes électromagnétiques d'une première fréquence se propagent vers l'unité de progression (18, 18', 18‴, 180) et que des ondes électromagnétiques d'une deuxième fréquence se propagent dans la troisième direction (d3).

9. Dispositif de détection d'ondes électromagnétiques (10, 100) selon la revendication 7 ou 8,
dans lequel le séparateur (16) comprend au moins l'un d'un demi-miroir, d'un séparateur de faisceau, d'un miroir dichroïque, d'un miroir de lumière froide, d'un miroir de lumière chaude, d'une méta-surface, d'un élément de déviation et d'un prisme.

10. Dispositif de détection d'ondes électromagnétiques (10, 100) selon l'une quelconque des revendications 7 à 9,
comprenant en outre un troisième détecteur (17, 170) configuré pour détecter des ondes électromagnétiques se propageant dans la troisième direction (d3).

11. Dispositif de détection d'ondes électromagnétiques (10, 100) selon la revendication 10,
comprenant en outre un contrôleur (14) configuré pour obtenir des informations concernant un sujet dans l'environnement sur la base d'ondes électromagnétiques détectées par le troisième détecteur (17, 170).

12. Système d'acquisition d'information (11),
comprenant :
le dispositif de détection d'ondes électromagnétiques (10, 100) selon la revendication 10, et
un dispositif de commande (14) configuré pour acquérir une information concernant un sujet dans l'environnement du dispositif de détection d'ondes électromagnétiques (10, 100) sur la base d'ondes électromagnétiques détectées par le troisième détecteur (17, 170) .

13. Dispositif de détection d'ondes électromagnétiques (10, 100) selon la revendication 1, comprenant en outre :
un irradiateur (12) configuré pour irradier des ondes électromagnétiques sur un objet (ob), et
une première ouverture (23) configurée pour permettre à certaines ondes électromagnétiques incidentes sur la première ouverture (23) de passer à travers la première ouverture (23), la première ouverture (23) fonctionnant comme un diaphragme,
dans lequel la première unité de formation d'image (15, 150) est configurée pour diriger les ondes électromagnétiques réfléchies par l'objet (ob) et passées à travers la première ouverture (23) vers l'unité de progression (18, 18', 18‴, 180), et
l'unité de progression (18, 18', 18‴, 180) est contenue dans le système optique télécentrique côté image.

14. Dispositif de détection d'ondes électromagnétiques (10, 100) selon la revendication 1, comprenant en outre :
un irradiateur (12) configuré pour irradier des ondes électromagnétiques sur un objet (ob), et
une première ouverture (23) configurée pour permettre à certaines ondes électromagnétiques incidentes sur la première ouverture (23) de passer à travers la première ouverture (23), la première ouverture (23) fonctionnant comme un diaphragme,
dans lequel la première unité de formation d'image (15, 150) est configurée pour diriger les ondes électromagnétiques réfléchies par l'objet (ob) et passées à travers la première ouverture (23) vers l'unité de progression (18, 18', 18‴, 180), et
un angle formé par les ondes électromagnétiques à émettre de la première unité de formation d'image (15, 150) et un axe principal de la première unité de formation d'image (15, 150) est égal à un angle formé par les ondes électromagnétiques incidentes sur l'unité de progression (18, 18', 18''', 180) et l'axe principal de la première unité de formation d'image (15, 150) qui coupe l'unité de progression (18, 18', 18‴, 180).

15. Dispositif de détection d'ondes électromagnétiques (10, 100) selon la revendication 1, dans lequel la première unité de formation d'image (15, 150) est une lentille.
